# DEMANDE DE BREVET EUROPEEN

(11) **EP 2 371 607 A1**
(43) Date de publication de la demande: **05.10.2011**
(21) Numéro de dépôt: 11160622.4
(22) Date de dépôt: 31.03.2011
(51) Int. Cl.: B60K 37/00, G06F 1/16

(54) **Interface homme/machine destinée á être intégrée dans une structure d'accueil**

(30) Priorité: 31.03.2010 FR 1052444
(71) Demandeur: VALEO SYSTEMES THERMIQUES, 78320 Le Mesnil Saint-Denis (FR)
(72) Inventeur: Autran, Frédéric, 75018, PARIS (FR); El Khoury, Ziad, 92160, Antony (FR)
(74) Mandataire: Pothmann, Karsten

(57) **Abrégé**

- Selon l'invention, l'interface (1), comportant un écran multifonction (2), une unité (13) de contrôle graphique, un microcontrôleur (4) et des moyens de communication (10, 14, 22, 26, 30), forme un module unitaire et autonome destiné à communiquer avec des dispositifs (5 à 9, 19, 32) intégrés dans la structure d'accueil et/ou avec des dispositifs nomades (23, 27) extérieurs à l'interface (1).

## Description

La présente invention concerne le domaine des interfaces homme/machine, notamment pour véhicule automobile.

Bien que la présente invention soit particulièrement adaptée aux véhicules automobiles, elle n'en est pas pour autant limitée à ce seul domaine d'application. Elle pourrait tout aussi bien être mise en oeuvre dans d'autres domaines d'application comme la domotique, les matériels informatiques ou, de manière plus générale, tout système de commande d'un équipement.

Dans la suite, on entend par « structure d'accueil » tout objet dans lequel peut être intégrée une interface homme/machine, comme par exemple un véhicule automobile, un appareil domotique, un ordinateur, etc.

Par ailleurs, on sait que les véhicules automobiles sont fréquemment équipés d'une ou plusieurs interfaces homme/machine, généralement intégrées dans la zone centrale de leur planche de bord, pour commander les différents dispositifs embarqués à bord des véhicules (par exemple la climatisation, le tuner radio, etc.).

Lorsque de telles interfaces homme/machine sont en outre pourvues d'un écran multifonction, celui-ci permet la visualisation d'informations diverses, par exemple fournies par un lecteur multimédia embarqué, un dispositif d'assistance de positionnement par satellite GPS (pour « Global Positioning System »), etc...

En particulier, on connaît des interfaces homme/machine monobloc pour véhicule automobile qui comprennent chacune :
- un écran multifonction équipé d'une surface tactile ;
- un microcontrôleur qui gère, au moins en partie, le fonctionnement de l'écran multifonction. Il permet notamment l'échange de données entre une interface homme/machine et certains des dispositifs embarqués à bord du véhicule (par exemple le dispositif de climatisation), extérieurs à l'interface, par l'intermédiaire de moyens de traitement adaptés à l'échange d'informations sur un réseau interne multiplexé du véhicule ;
- une unité de contrôle graphique apte à piloter, avec le microcontrôleur, l'écran multifonction à partir d'informations reçues, d'une part, du microcontrôleur et, d'autre part, de moyens de traitement adaptés à l'échange d'informations vidéo, auxquels elle est reliée ;
- un amplificateur audio lié au microcontrôleur et à des moyens de connexion auxquels sont reliées les enceintes acoustiques du véhicule ;
- un lecteur de CD/DVD en liaison avec le microcontrôleur et l'amplificateur audio ;
- un tuner qui est connecté au microprocesseur, à l'amplificateur audio ainsi qu'à des moyens de connexion antenne destinés à être reliés à une ou plusieurs antennes du véhicule (antenne radio, antenne de téléphonie mobile, etc.) ;
- un module de téléphonie mobile GSM (pour « Global System for Mobile Communications ») apte notamment à gérer des appels téléphoniques reçus ou établis depuis le véhicule. Ce module GSM est relié au microcontrôleur et aux moyens de connexion antenne précités ;
- un module de positionnement par satellite de type GPS qui est relié au microcontrôleur ainsi qu'aux moyens de connexion antenne. Ce module comprend un composant électronique dédié au GPS et le microcontrôleur comporte les moyens nécessaires à la navigation ainsi que les cartes routières ;
- des moyens de communication sans fil de type Bluetooth reliés au microcontrôleur. Ces moyens de communication Bluetooth comportent un module d'interface Bluetooth associé à une antenne Bluetooth intégrée dans l'interface homme/Machine ;
- des moyens de connexion USB (pour « Universal Serial Bus ») reliés au microcontrôleur. Ces moyens comportent un module d'interface USB relié au microcontrôleur et à un port USB monté en façade l'interface ;
- les moyens de traitement adaptés à l'échange d'informations sur un réseau interne multiplexé du véhicule de type CAN (pour « Controller Area Network ») ou LIN (pour « Local Interconnect Network »). Ces moyens de traitement sont par exemple reliés au dispositif de climatisation du véhicule non intégré dans l'interface homme/machine. Ils comportent un module d'interface réseau multiplexé CAN ou LIN relié à un connecteur, dit connecteur véhicule, lui-même relié au dispositif de climatisation. De la sorte, des informations portant par exemple sur l'état de la climatisation sont susceptibles d'être affichées sur l'écran multifonction ;
- les moyens de traitement adaptés à l'échange d'informations vidéo (ou flux vidéo) transmises sur des liaisons de type LVDS (pour « Low Voltage Differential Signaling ») ou composites. Ces moyens de traitement sont, par exemple, reliés à un dispositif d'aide à la conduite ADAS (pour « Advanced Driver Assistance System ») embarqué à bord du véhicule. Ils comportent un module d'interface vidéo relié à un connecteur, dit connecteur vidéo, lui-même relié au dispositif ADAS. Ainsi faisant, des images provenant d'une caméra arrière embarquée, auxquelles des informations dites de réalité augmentée ont été ajoutées, peuvent être traitées pour être ensuite affichées sur l'écran multifonction ; et
- les moyens de connexion à distance aptes à être reliés à une ou plusieurs antennes du véhicule.

De telles interfaces homme/machine peuvent également comporter des boutons de commande et/ou des indicateurs (sous la forme de voyants), montés en façade et reliés au microcontrôleur associé.

Chaque interface homme/machine se présente en outre sous la forme d'un boîtier sensiblement parallélépipédique comportant :
- une face avant de recouvrement, encore désignée plastron, formant façade, permettant d'isoler l'intérieur de l'interface de l'habitacle pour des raisons esthétiques et techniques (protection contre la poussière, des projections diverses, etc.). Au niveau de cette façade, sont localisés l'écran multifonction, les boutons et/ou indicateurs, la partie apparente du lecteur de CD/DVD, les moyens de connexion USB, ... ; et
- un capot qui forme une enveloppe pour intégrer et protéger l'ensemble des éléments de chaque interface. Ce capot comporte un fond arrière relié à une ceinture périphérique, par exemple à section rectangulaire. Il est rapporté à la face de recouvrement, de manière à former un boîtier monobloc capable d'être inséré dans la planche de bord du véhicule afin d'y être fixé.

Cependant, du fait du nombre élevé de dispositifs mentionnés ci-dessus intégrés dans ces interfaces, leur épaisseur, définie par la distance séparant la face de recouvrement du fond arrière suivant une direction orthogonale par rapport à la face de recouvrement, est généralement supérieure à 200mm, de sorte que les planches de bord des véhicules doivent être modifiées pour pouvoir recevoir le boîtier monobloc correspondant. Autrement dit, les dimensions importantes des boîtiers monoblocs contraignent les constructeurs automobiles à adapter les planches de bord des véhicules. Par conséquent, l'intégration de ces boîtiers s'avère gênante, fastidieuse et couteuse.

En outre, la quantité importante de dispositifs intégrés que comportent ces interfaces homme/machine rend plus complexe leur fabrication et augmente le risque de malfaçon. A titre d'exemple, le module de positionnement par satellite de type GPS doit comporter une mémoire et des moyens de calcul important pour stocker les cartes routières et mettre en oeuvre le calcul de positionnement.

La présente invention a notamment pour objet de remédier aux inconvénients précités.

A cet effet, l'invention concerne une interface homme/machine destinée à être intégrée dans une structure d'accueil, ladite interface comportant :
- un écran multifonction équipé d'une surface tactile ;
- une unité de contrôle graphique apte à piloter, au moins en partie, l'écran multifonction ;
- un microcontrôleur apte à gérer, au moins en partie, le fonctionnement de l'écran multifonction ;
- des moyens de communication formés pour permettre l'échange d'informations entre, d'une part, l'interface et au moins un dispositif intégré dans la structure d'accueil et, d'autre part, entre l'interface et au moins un dispositif nomade extérieur à la structure d'accueil, remarquable en ce que l'interface forme un module unitaire, avantageusement autonome, destiné à communiquer avec le dispositif intégré dans la structure d'accueil et/ou le dispositif nomade extérieur à cette dernière.

Ainsi, grâce à l'invention, le(s) dispositif(s) intégré(s) dans la structure d'accueil et le(s) dispositif(s) nomade(s), avec lesquels l'interface peut communiquer, sont externes à l'interface. En conséquence, la complexité de l'interface est sensiblement réduite, ce qui facilite sa fabrication et son intégration dans la planche de bord d'un véhicule, diminue le risque de défaut de fabrication et améliore sa fiabilité.

Par exemple, dans le cas d'une application pour véhicule automobile, les dispositifs suivants intégrés dans un véhicule sont extérieurs à l'interface homme/machine de l'invention, avec lesquels elle communique par ailleurs :
- amplificateur audio ;
- lecteur de CD/DVD ;
- tuner radio ;
- module de téléphonie mobile GSM ; et
- module de positionnement par satellite de type GPS ou au moins une partie dudit module, comme le moyen calcul nécessaire à la navigation et le moyen de stockage des cartes routières.

En outre, lorsque le dispositif nomade (par exemple un téléphone portable) comporte des dispositifs semblables à ceux déjà intégrés dans la structure d'accueil (par exemple, dans le cas d'une application automobile : un tuner, un module de téléphonie GSM, au moins une partie d'un module de positionnement GPS, etc.), ces derniers dispositifs peuvent être supprimés de la structure d'accueil. Dans ce cas, l'interface homme/machine de l'invention utilise les fonctionnalités des dispositifs intégrés dans le dispositif nomade avec lequel elle peut communiquer. Ainsi faisant, on évite une redondance de dispositifs, ce qui réduit le coût de la structure d'accueil, tout en conservant les mêmes fonctionnalités. De plus, l'intégration de l'interface homme/machine de l'invention dans la structure d'accueil est grandement facilitée.

De préférence, selon l'invention, lesdits moyens de communication comportent :
- des moyens de traitement formés pour permettre l'échange d'informations vidéo entre l'unité de contrôle graphique et au moins un dispositif vidéo intégré dans la structure d'accueil ; et
- des moyens de traitement formés pour permettre l'échange de données, sur un réseau interne multiplexé du véhicule, entre le microprocesseur et au moins un dispositif intégré dans la structure d'accueil.

En outre, lesdits moyens de communication peuvent également avantageusement comporter :
- des moyens de connexion USB formés pour permettre l'échange de données entre le microcontrôleur et au moins un dispositif nomade extérieur à la structure d'accueil ; lesdits moyens de connexion USB pouvant charger tous dispositifs connectés à ces derniers ; et
- des moyens de communication sans fil formés pour permettre l'échange de données entre le microcontrôleur et au moins un dispositif nomade extérieur à la structure d'accueil.

Dans une forme de réalisation de l'invention, lesdits moyens de communication sans fil comportent au moins une antenne compatible avec le protocole de communication sans fil Bluetooth.

En variante ou en complément, lesdits moyens de communication sans fil peuvent comporter au moins une antenne compatible avec le protocole de communication sans fil Wifi.

Par ailleurs, lesdits moyens de communication comportent de préférence des moyens de connexion audio formés pour permettre l'échange de données entre, d'une part, le microcontrôleur et au moins un dispositif audio intégré dans la structure d'accueil et, d'autre part, les moyens de communication sans fil et ledit dispositif audio intégré.

De façon avantageuse, l'interface comportant un boitier comprenant une face avant de recouvrement et un fond arrière, la distance maximale (correspondant à l'épaisseur du boîtier) séparant la face de recouvrement du fond arrière suivant une direction orthogonale par rapport à la face de recouvrement est approximativement égale à 100 mm.

Ainsi, l'épaisseur du boîtier est notablement inférieure à celle des boîtiers d'interface homme/machine connue (environ 200 mm). Une telle finesse facilite l'intégration des interfaces homme/machine selon l'invention, par exemple dans les planches de bord des véhicules. En effet, il n'est plus nécessaire de modifier considérablement la zone centrale des planches de bord pour intégrer et installer ces interfaces. En d'autres termes, l'utilisation d'une interface selon l'invention permet de faciliter son installation dans les structures d'accueil correspondantes.

Dans une autre forme de réalisation de l'invention, l'interface homme/machine comporte un tableau de commande en communication avec le microcontrôleur.

Un tel tableau de commande peut comporter un ou plusieurs boutons de commande et/ou indicateurs.

Par ailleurs, la structure d'accueil peut être un véhicule automobile.

Les figures annexées feront bien comprendre comment l'invention peut être réalisée et pourront à servir à mieux définir l'invention, le cas échéant. Sur ces figures, des références identiques désignent des éléments semblables.

La figure 1 est un schéma synoptique d'une interface homme/machine conforme à la présente invention.

La figure 2 est une vue en coupe schématique de l'interface homme/machine de la figure 1.

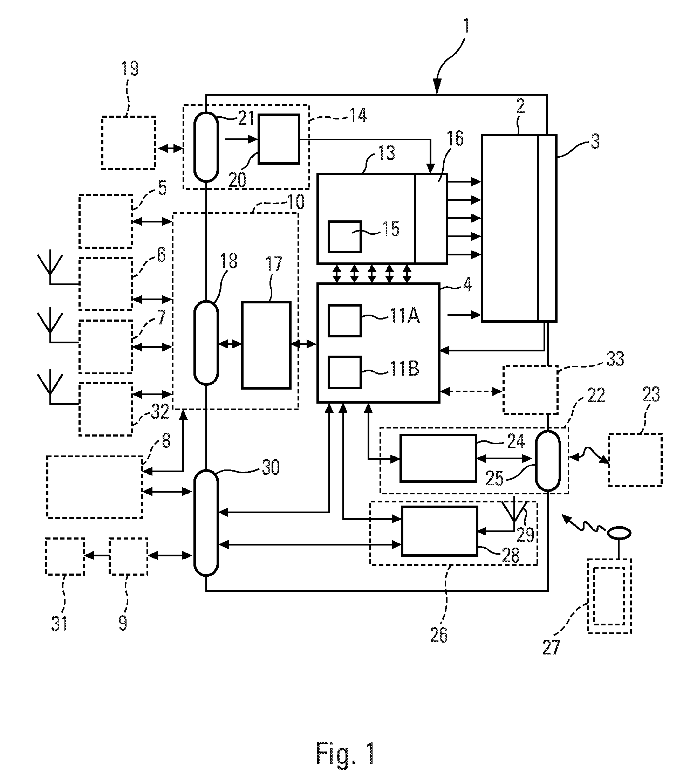

Sur la figure 1, on a représenté un exemple d'interface homme/machine, conforme à la présente invention, pour véhicule automobile (non représenté sur les figures).

On rappellera que la présente invention n'est aucunement limitée à l'application automobile et qu'elle s'applique tout aussi bien à des domaines d'application tels que la domotique, le matériel informatique, etc...

Comme le montre la figure 1, l'interface homme/machine 1 comporte :
- un écran multifonction 2 équipé d'une surface tactile 3 ;
- un microcontrôleur 4 qui gère, au moins en partie, le fonctionnement de l'écran multifonction 2. Le microcontrôleur 4 permet également l'échange de données entre l'interface 1 et certains dispositifs 5 à 9 et 32 embarqués à bord du véhicule (par exemple le dispositif de climatisation 5), mais non intégrés dans l'interface 1. Cet échange de données est réalisé par l'intermédiaire de moyens de traitement 10 adaptés à l'échange d'informations sur un réseau interne multiplexé du véhicule. Le microcontrôleur comporte également une logique d'interface homme/machine (non représentée), un décodeur vidéo 11A, ainsi qu'une mémoire interne 11 B dédiée au stockage de données ; et
- une unité 13 de contrôle graphique apte à piloter, avec le microcontrôleur 4, l'écran multifonction 2 à partir d'informations reçues, d'une part, du microcontrôleur 2 et, d'autre part, des moyens de traitement 14 adaptés à l'échange d'informations vidéo, auxquels elle est reliée. L'unité 13 assure la conversion et le traitement des données qu'elle reçoit pour les adapter aux fonctionnalités de l'écran multifonction 2 (par exemple gestion des menus, du fenêtrage, de la station de radio sélectionnée, etc.). L'unité de contrôle graphique 13 comporte également une mémoire interne 15 pour le stockage de données. Elle comporte en outre un mixeur vidéo 16 apte à mélanger diverses informations vidéo.

En outre, l'interface homme/machine 2 de la présente invention comprend :
- les moyens 10 de traitement qui comportent un module 16 d'interface réseau multiplexé CAN ou LIN relié à un connecteur 18, dit connecteur véhicule, lui-même relié, par exemple, au dispositif de climatisation 5, ce qui permet l'affichage sur l'écran multifonction 2 d'informations portant sur la climatisation du véhicule. Le module 16 peut comporter une alimentation interne. Par ailleurs, lorsque le véhicule possède un module 6 de téléphonie mobile GSM, un module 7 de positionnement par satellite de type GPS et un tuner radio/amplificateur audio 32 non intégrés dans l'interface homme/machine, ces dispositifs 6, 7 et 32 sont aptes à communiquer avec le microcontrôleur 4 de l'interface 1 par l'intermédiaire des moyens de traitement 10 ; A titre d'exemple, on comprendra donc que le tuner radio/amplificateur audio 32 communique avec l'interface selon l'invention pour les fonctions de contrôle et de commande audio (station, volume, basse, volume avant versus volume arrière...) en utilisant le module 16 d'interface multiplexé, ce dernier recevant également des informations à afficher sur l'écran multifonction 2 en rapport avec la fonction audio ;
- les moyens 14 de traitement adaptés à l'échange d'informations vidéo transmises sur des liaisons de type LVDS ou composites. Dans l'exemple de réalisation de la figure 1, ces moyens de traitement 14 sont reliés à un dispositif 19 d'aide à la conduite ADAS, embarqué à bord du véhicule, mais externe à l'interface 1. Les moyens 14 comportent un module d'interface vidéo 20 de type LVDS ou composite qui est relié à un connecteur 21, dit connecteur vidéo, lui-même relié au dispositif ADAS 19. Des images, provenant d'une caméra arrière embarquée (non représentée) accompagnées d'informations dites de réalité augmentée, peuvent ainsi être affichées sur l'écran multifonction 2 ;
- des moyens 22 de connexion USB formés pour permettre des échanges de données, conformément au protocole USB, entre le microcontrôleur 4 et un dispositif nomade 23 externe au véhicule, par exemple un disque dur externe, un lecteur portable de musique MP3, un téléphone portable, etc. Les moyens 22 comportent un module 24 d'interface USB relié au microcontrôleur 4 et à un port USB 25 intégré dans l'interface 1 ;
- des moyens 26 de communication sans fil compatibles avec la technologie sans fil Bluetooth, formés pour permettre l'échange de données entre le microcontrôleur 4 et un dispositif nomade 27 externe, par exemple un téléphone portable, lui-même équipé de moyens de communication sans fil Bluetooth. Les moyens 26 comportent un module 28 d'interface Bluetooth, relié au microcontrôleur 4 et associé à une antenne 29 Bluetooth intégrée dans l'interface homme/Machine 1 ; et
- des moyens 30 de connexion audio formés pour permettre l'échange de données, d'une part, entre le microcontrôleur 4 et un lecteur CD/DVD 8 et, d'autre part, entre le microcontrôleur 4 et un amplificateur audio 9, le lecteur 8 et l'amplificateur 9 étant embarqués à bord du véhicule. En outre, les moyens 30 permettent également l'échange de données entre les moyens 26 de communication sans fil et l'amplificateur audio 9, ce dernier étant relié aux enceintes acoustiques 31 du véhicule. On comprend donc que le lecteur CD/DVD envoie ses informations directement à l'amplificateur 9 sans passer par l'interface homme-machine selon l'invention et que seuls les signaux de contrôle ou de commande dudit lecteur sont envoyés à l'interface selon l'invention.

Par ailleurs, l'interface homme/machine 1 peut comporter un tableau de commande 33 pourvu de boutons de commande et/ou d'indicateurs (par exemple sous la forme de voyants lumineux) destinés à commander et contrôler au moins certaines fonctionnalités de l'interface 1. Ce tableau de commande 33, relié au microcontrôleur 4, est monté en façade de l'interface 1, de manière à être aisément accessible à l'utilisateur.

Ainsi, l'interface 1 forme un module, ou bloc, unitaire et autonome destiné à être monté dans la planche de bord du véhicule pour communiquer avec les dispositifs intégrés 5 à 9, 19 et 32 dans le véhicule et les dispositifs nomades 23 et 27, externes à ce dernier.

En outre, dans cet exemple de réalisation, l'interface 1 n'intègre pas les dispositifs embarqués suivants, avec lesquels elle communique par ailleurs :
- le module 6 de téléphonie mobile GSM ;
- le module 7 de positionnement par satellite de type GPS ou au moins une partie de ce module, c'est-à-dire le moyen de calcul de la navigation et le moyen de stockage des cartes routières ;
- le lecteur de CD/DVD 8 ;
- l'amplificateur audio 9 ; et
- le tuner radio 32,
de sorte que l'interface 1 est de conception plus simple que les interfaces homme/machine connues décrites préalablement. Sa fabrication est rendue plus aisée et sa fiabilité notablement améliorée.

De plus, lorsque le dispositif nomade 23, 27 comporte un module 6 GSM, un module 7 GPS et un tuner radio ou lecteur MP3 32, etc..., le véhicule automobile peut alors être dépourvu de ces dispositifs 6, 7 et 32. En effet, l'interface 1 peut utiliser les fonctionnalités de ces dispositifs intégrés 6, 7 et 32 dans le dispositif nomade 23, 27 avec lequel elle peut communiquer par les moyens 22 de connexion USB et/ou les moyens 26 de communication sans fil, le microcontrôleur 4 et l'unité 13 assurant l'adaptation des données. Ainsi faisant, on évite une redondance de dispositifs, réduisant le cout de la structure d'accueil, tout en conservant les mêmes fonctionnalités.

A titre alternatif et dans le cas où le dispositif autonome, par exemple le téléphone, comportant le module 7 de positionnement par satellite de type GPS est rangé dans le véhicule à un endroit où il ne peut pas recevoir les signaux de satellites (dans le coffre, dans une veste, etc..), l'invention prévoit que l'interface homme-machine comporte un composant GPS raccordé à une antenne GPS disposée soit dans l'interface selon l'invention, soit ailleurs sur le véhicule. Dans ce dernier cas, les moyens 10 de traitement de l'interface seront connectés à ladite antenne GPS installée à l'extérieure et de manière distincte de l'interface selon l'invention. Le composant GPS est dédié en ce sens qu'il s'agit d'un microcontrôleur spécifiquement limité à la fonction GPS, qui reçoit les signaux des satellites et les met en forme pour une utilisation dans le moyen de calcul de la navigation installé dans le dispositif autonome.

Dans une telle situation, les moyens nécessaires à la navigation et les moyens nécessaires au stockage des cartes routières sont externes à l'interface selon l'invention, ces moyens faisant partis du dispositif autonome 23, 27. L'interface selon l'invention est donc réduite au strict nécessaire tout en offrant un service de navigation optimum. Bien entendu, la communication des informations relatives au GPS entre l'interface selon l'invention et le dispositif autonome se fera via les moyens de communication, par exemple par USB, Wifi ou Bluetooth.

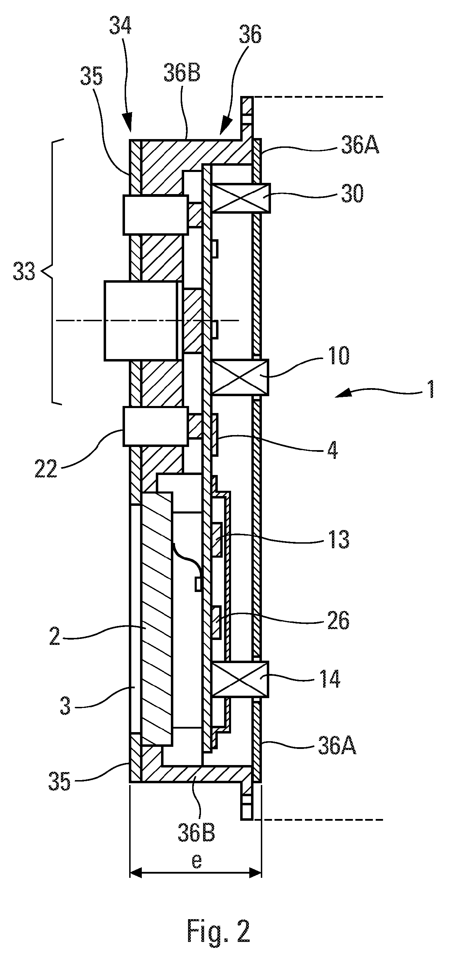

Par ailleurs, comme le montre la coupe schématique de la figure 2, l'interface 1 comporte un boîtier 34 qui se présente généralement sous une forme sensiblement parallélépipédique et qui comprend :
- une face avant de recouvrement 35, encore désignée plastron, formant façade, permettant d'isoler l'intérieur de l'interface 1 de l'habitacle du véhicule. Au niveau de cette façade, sont localisés l'écran multifonction 2 équipé de la surface tactile 3, le tableau de commande 33 et les moyens 22 de connexion USB ; et
- un capot 36 qui forme une enveloppe intégrant et protégeant l'ensemble des éléments de l'interface 1. Ce capot 36 comporte un fond arrière 36A relié à une ceinture périphérique 36B, par exemple à section rectangulaire. Il est lié à la face de recouvrement 35, de manière à former le boîtier 34 monobloc capable d'être inséré dans la planche de bord (non représenté) du véhicule afin d'y être fixé.

Grâce à l'invention et au nombre limité de dispositifs intégrés dans l'interface 1, la distance maximale e (correspondant à l'épaisseur du boîtier 34) séparant la face de recouvrement 35 du fond arrière 36A suivant une direction orthogonale par rapport à la face de recouvrement 35 est au maximum égale à 100 mm. Une telle finesse facilite l'intégration de l'interface 1 dans la planche de bord du véhicule.

Par ailleurs, il est bien évident que la présente invention ne saurait en rien être limitée à l'exemple de réalisation décrit ci-dessus. En outre, les dispositifs embarqués dans le véhicule et/ou intégrés dans le dispositif nomade, avec lesquels l'interface homme/machine de l'invention peut communiquer, sont donnés à titre d'exemple illustratif, mais non limitatif quant à leur nombre et à leur fonctionnalité.

Enfin, on comprendra que l'invention peut être définie aussi en un système d'échange de données pour ladite structure d'accueil, ledit système comportant :
- au moins un des dispositifs d'application suivants :
   ■ un dispositif auxiliaire intégré dans la structure d'accueil ;
   ■ un dispositif nomade extérieur à la structure d'accueil, et
- une interface homme/machine destinée à être intégrée dans la structure d'accueil et apte à communiquer avec le dispositif d'application, caractérisé en ce que le dispositif d'application est externe à l'interface homme/machine.

Dans un tel cas, l'interface homme/machine comporte l'écran multifonction 2 équipé de la surface tactile 3 ; l'unité 13 de contrôle graphique apte à piloter, au moins en partie, l'écran multifonction 2 ; le microcontrôleur 4 apte à gérer, au moins en partie, le fonctionnement de l'écran multifonction 2 ; les moyens de communication formés pour permettre l'échange d'informations entre, d'une part, l'interface 1 et au moins le dispositif d'application externe intégré dans la structure d'accueil et, d'autre part, entre l'interface 1 et au moins le dispositif nomade 23, 27 extérieur à la structure d'accueil. Ces moyens de communication permettent l'échange d'informations vidéo entre l'unité de contrôle graphique 13 et au moins le dispositif vidéo 19 intégré dans la structure d'accueil ; et les moyens 10 de traitement sont formés pour permettre l'échange de données, sur un réseau interne multiplexé du véhicule, entre le microprocesseur 4 et au moins le dispositif d'application externe intégré dans la structure d'accueil.

Ces moyens de communication comportent en outre les moyens 22 de connexion USB formés pour permettre l'échange de données entre le microcontrôleur 4 et au moins le dispositif nomade 23 extérieur à la structure d'accueil ; et les moyens 26 de communication sans fil sont formés pour permettre l'échange de données entre le microcontrôleur 4 et au moins le dispositif nomade 27 extérieur à la structure d'accueil.

Selon cette définition, lesdits moyens de communication comportent des moyens 30 de connexion audio permettant l'échange de données entre, d'une part, le microcontrôleur 4 et au moins un dispositif audio 8, 9 externe intégré dans la structure d'accueil et, d'autre part, les moyens 26 de communication sans fil et le dispositif audio 8, 9.

Dans cette situation aussi, l'interface homme-machine distinct des dispositifs auxiliaires intégrés dans la structure d'accueil et distinct du dispositif nomade extérieur à la structure d'accueil comporte un boitier 34 comprenant une face avant 35 de recouvrement et un fond arrière 36A, dans laquelle la distance maximale e séparant la face de recouvrement 35 du fond arrière 36A suivant une direction orthogonale par rapport à la face de recouvrement 35 est au maximum égale à 100 mm.

Enfin, on comprendra que le dispositif auxiliaire intégré dans la structure d'accueil et externe à l'interface homme/machine appartient au groupe comportant au moins un des dispositifs suivants :
- amplificateur audio ;
- lecteur de CD/DVD ;
- tuner radio ;
- module de téléphonie mobile GSM ; et
- module de positionnement par satellite de type GPS ou au moins une partie de ce module, c'est-à-dire le moyen de calcul de la navigation et le moyen de stockage des cartes routières.

## Revendications

1. Interface homme/machine destinée à être intégrée dans une structure d'accueil, ladite interface (1) comportant :
- un écran multifonction (2) équipé d'une surface tactile (3) ;
- une unité (13) de contrôle graphique apte à piloter, au moins en partie, l'écran multifonction (2) ;
- un microcontrôleur (4) apte à gérer, au moins en partie, le fonctionnement de l'écran multifonction (2) ;
- des moyens de communication formés pour permettre l'échange d'informations entre, d'une part, l'interface (1) et au moins un dispositif (5 à 9, 19, 32) intégré dans la structure d'accueil et, d'autre part, entre l'interface (1) et au moins un dispositif nomade (23, 27) extérieur à la structure d'accueil,
**caractérisée en ce que** l'interface forme un module unitaire destiné à communiquer avec le dispositif (5 à 9, 19, 32) intégré dans la structure d'accueil et/ou le dispositif nomade (23, 27) extérieur à cette dernière.

2. Interface selon la revendication 1, dans laquelle lesdits moyens de communication comportent :
- des moyens (14) de traitement formés pour permettre l'échange d'informations vidéo entre l'unité de contrôle graphique (13) et au moins un dispositif vidéo (19) intégré dans la structure d'accueil ; et
- des moyens (10) de traitement formés pour permettre l'échange de données, sur un réseau interne multiplexé du véhicule, entre le microprocesseur (4) et au moins un dispositif (5 à 8, 32) intégré dans la structure d'accueil.

3. Interface selon l'une des revendications 1 à 2, dans laquelle lesdits moyens de communication comportent en outre :
- des moyens (22) de connexion USB formés pour permettre l'échange de données entre le microcontrôleur (4) et au moins un dispositif nomade (23) extérieur à la structure d'accueil ; et
- des moyens (26) de communication sans fil formés pour permettre l'échange de données entre le microcontrôleur (4) et au moins un dispositif nomade (27) extérieur à la structure d'accueil.

4. Interface selon la revendication 3, dans laquelle lesdits moyens (26) de communication sans fil comportent au moins une antenne (29) compatible avec le protocole de communication sans fil Bluetooth.

5. Interface selon l'une des revendications 3 ou 4, dans laquelle lesdits moyens (26) de communication sans fil comportent au moins une antenne compatible avec le protocole de communication sans fil Wifi.

6. Interface selon l'une des revendications 1 à 5, dans laquelle lesdits moyens de communication comportent des moyens (30) de connexion audio formés pour permettre l'échange de données entre, d'une part, le microcontrôleur (4) et au moins un dispositif audio (8, 9) intégré dans la structure d'accueil et, d'autre part, les moyens (26) de communication sans fil et le dispositif audio (8, 9).

7. Interface selon l'une des revendications 1 à 6, dans laquelle est intégré un composant GPS dédié apte à recevoir les signaux d'une antenne GPS.

8. Interface selon l'une des revendications 1 à 7, comportant un boitier (34) comprenant une face avant (35) de recouvrement et un fond arrière (36A),
dans laquelle la distance maximale (e) séparant la face de recouvrement (35) du fond arrière (36A) suivant une direction orthogonale par rapport à la face de recouvrement (35) est au maximum égale à 100 mm.

9. Interface selon l'une des revendications 1 à 8, comportant un tableau de commande (33) en communication avec le microcontrôleur (4).

10. Interface selon l'une des revendications 1 à 9, dans laquelle la structure d'accueil est un véhicule automobile.
